(19) Europäisches Patentamt / European Patent Office / Office européen des brevets

(11) **EP 2 808 734 B1**

(12) **FASCICULE DE BREVET EUROPEEN**

(45) Date de publication et mention
de la délivrance du brevet:
**06.04.2016 Bulletin 2016/14**

(51) Int Cl.:
**G03B 21/62** *(2006.01)*    **G03B 21/60** *(2006.01)*

(21) Numéro de dépôt: **14169890.2**

(22) Date de dépôt: **26.05.2014**

(54) **Ecran et dispositif d'affichage en rétroprojection**

Bildschirm und Vorrichtung zur Rückprojektionsanzeige

Screen and device for back-projection display

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.05.2013 FR 1354843**

(43) Date de publication de la demande:
**03.12.2014 Bulletin 2014/49**

(73) Titulaire: **COMMISSARIAT A L'ENERGIE
ATOMIQUE ET AUX
ENERGIES ALTERNATIVES
75015 Paris (FR)**

(72) Inventeur: **Rossini, Umberto
38500 Coublevie (FR)**

(74) Mandataire: **Thibon, Laurent
Cabinet Beaumont
1, rue Champollion
38000 Grenoble (FR)**

(56) Documents cités:
**JP-A- H09 230 508     JP-A- 2004 361 539
JP-A- 2007 052 451     US-A1- 2011 096 394**

**Description**

Domaine

La présente demande concerne un écran d'affichage en rétroprojection et un dispositif d'affichage en rétroprojection comportant un tel écran. Plus particulièrement, la présente demande concerne un écran et un dispositif d'affichage en rétroprojection susceptibles d'être intégrés dans un habitacle de véhicule.

Exposé de l'art antérieur

On appelle rétroprojection la projection d'images sur une face d'un écran transmissif, appelée ci-après par convention la face arrière de l'écran, pour la visualisation des images sur la face opposée de l'écran, appelée ci-après par convention la face avant de l'écran. On a déjà proposé d'utiliser des dispositifs d'affichage en rétroprojection pour fournir des informations dans des habitacles de véhicules, par exemple de voitures. De tels dispositifs peuvent par exemple être intégrés au niveau de la console centrale d'une voiture, ou encore au dessus de cette console centrale. Cependant, des contraintes importantes existent sur des dispositifs d'affichage en rétroprojection intégrés dans des habitacles de véhicules. Ces dispositifs doivent notamment être relativement compacts, être assez directionnels pour éviter des projections lumineuses en direction d'éléments réfléchissants tels que le pare-brise, et assurer la production d'un flux lumineux et d'un contraste en sortie suffisants pour éviter des défauts de lisibilité lorsque le véhicule est placé sous un éclairement de luminosité importante, par exemple en provenance du soleil. En particulier, des problèmes se posent lorsque l'image projetée sur l'écran doit pouvoir être visualisée sous un angle différent de la normale à l'écran, par exemple lorsque l'écran est situé sur la console centrale d'une voiture et que l'image doit pouvoir être visualisée par le conducteur et/ou par un passager avant voisin du conducteur.

Résumé

Un objet d'un mode de réalisation est de prévoir un dispositif d'affichage en rétroprojection palliant tout ou partie des inconvénients des dispositifs d'affichage en rétroprojection connus.

Un autre objet d'un mode de réalisation est de prévoir un écran d'affichage en rétroprojection palliant tout ou partie des inconvénients des écrans d'affichage en rétroprojection connus.

Un autre objet d'un mode de réalisation est de prévoir un écran et un dispositif d'affichage en rétroprojection permettant la visualisation d'une image sous un angle différent de la normale à l'écran.

Ainsi, un mode de réalisation prévoit un écran d'affichage en rétroprojection, comprenant un film dont une face tournée vers l'arrière de l'écran comporte des stries à section triangulaire définissant des prismes, dans lequel au moins une paroi de chacune desdites stries a une inclinaison telle que l'angle d'incidence, sur ladite paroi, d'un rayon lumineux normal à l'écran soit égal, à 5 degrés près, à l'angle de Brewster du dioptre formé par ladite paroi.

Selon un mode de réalisation de la présente invention, les prismes ont, en section, la forme de triangles isocèles.

Selon un mode de réalisation de la présente invention, la base des prismes définit une surface continue parallèle à l'écran.

Selon un mode de réalisation de la présente invention, l'écran comprend en outre une couche revêtant la face striée dudit film, d'indice de réfraction inférieur à l'indice de réfraction dudit film.

Selon un mode de réalisation de la présente invention, le film comporte du polytéréphtalate d'éthylène.

Selon un mode de réalisation de la présente invention, l'écran comporte en outre un diffuseur situé du côté de la face non striée dudit film.

Selon un mode de réalisation de la présente invention, l'écran comprend en outre un polariseur rectiligne situé du côté de la face non striée dudit film.

Selon un mode de réalisation de la présente invention, l'écran comprend en outre une lame quart d'onde située du côté de la face non striée dudit film.

Selon un mode de réalisation de la présente invention, le polariseur est situé entre ledit film et la lame quart d'onde.

Selon un mode de réalisation de la présente invention, les axes neutres de la lame quart d'onde forment un angle d'approximativement 45 degrés avec la direction de polarisation du polariseur.

Un autre mode de réalisation prévoit un dispositif d'affichage en rétroprojection, comprenant l'écran susmentionné et une source lumineuse adaptée à projeter une image sur l'arrière de l'écran.

Selon un mode de réalisation de la présente invention, l'angle d'incidence de la lumière projetée par la source sur au moins une paroi de chacune desdites stries est approximativement égal à l'angle de Brewster du dioptre formé par ladite paroi.

Selon un mode de réalisation de la présente invention, la lumière émise par la source est polarisée rectilignement selon une direction parallèle aux plans d'incidence de la lumière sur lesdites parois.

Selon un mode de réalisation de la présente invention, la lumière projetée par la source éclaire l'arrière de l'écran sous une incidence normale à l'écran.

Selon un mode de réalisation de la présente invention, le dispositif d'affichage comporte en outre une lentille de Fresnel entre la source et l'écran.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente schématiquement un exemple d'un dispositif d'affichage en rétroprojection ;
la figure 2 représente schématiquement un exemple d'un écran d'affichage en rétroprojection ;
les figures 3A à 3C représentent schématiquement un autre exemple d'un écran d'affichage en rétroprojection ;
la figure 4 est une vue en coupe partielle et schématique d'un exemple d'un dispositif d'affichage en rétroprojection ;
la figure 5 est une vue en coupe partielle et schématique d'un exemple d'un mode de réalisation d'un dispositif d'affichage en rétroprojection ; et
la figure 6 est une vue en coupe partielle et schématique d'une variante de réalisation du dispositif d'affichage en rétroprojection de la figure 5.

Par souci de clarté, de mêmes éléments ont été désignés par de mêmes références aux différentes figures et, de plus, comme cela est habituel dans la représentation des systèmes optiques, les diverses figures ne sont pas tracées à l'échelle.

Description détaillée

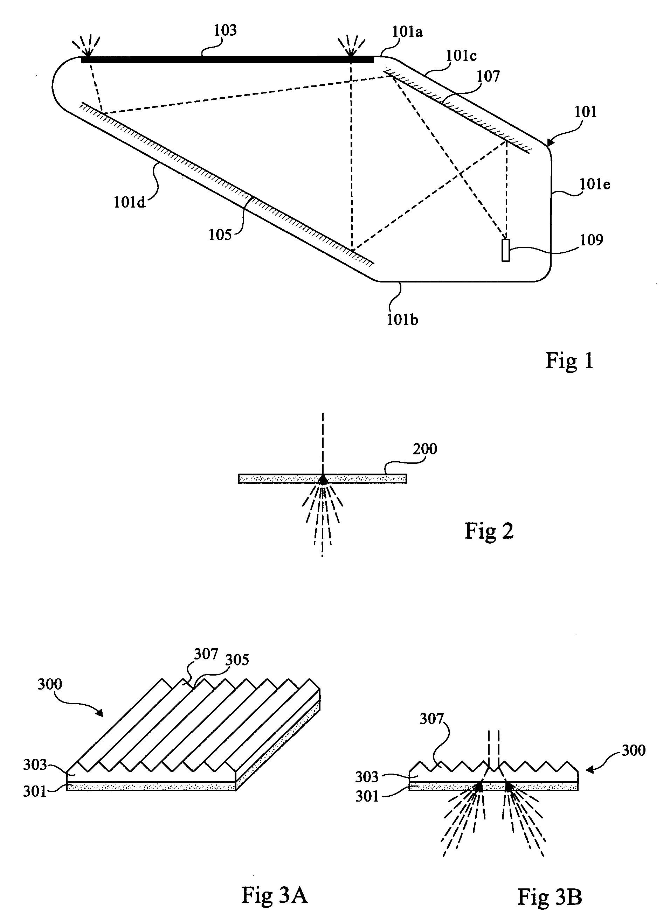

La figure 1 est une vue en coupe schématique représentant un exemple d'un dispositif d'affichage en rétroprojection susceptible d'être intégré dans un habitacle de véhicule, par exemple au niveau de la console centrale d'un véhicule automobile.

Le dispositif de la figure 1 comprend un boîtier 101 délimitant une enceinte dans laquelle sont intégrés des éléments de projection du dispositif. Dans cet exemple, le boîtier 101 à la forme générale d'un parallélépipède tronqué selon un plan parallèle à l'une de ses arêtes. Sur la figure 1, cinq parois 101a, 101b, 101c, 101d et 101e du boîtier 101 sont visibles. La paroi 101a correspond à une première face du parallélépipède, la paroi 101b correspond à une deuxième face tronquée du parallélépipède, parallèle à la paroi 101a, la paroi 101c correspond à une troisième face tronquée du parallélépipède, formant un angle obtus avec la paroi 101a, et la paroi 101d correspond à une quatrième face du parallélépipède, parallèle à la paroi 101c, formant un angle aigu avec la paroi 101a. La paroi 101e relie la paroi 101b à la paroi 101c dans le plan de troncature du parallélépipède, et forme, dans cet exemple un angle approximativement droit avec la paroi 101b.

Le boîtier 101 comprend une ouverture de sortie dans la paroi 101a, dans laquelle est positionné un écran 103 d'affichage en rétroprojection. La face arrière de l'écran 103, destinée à recevoir une image projetée par une source lumineuse, est tournée vers l'intérieur du boîtier 101, alors que sa face avant, destinée à être visualisée par un utilisateur, est dirigée vers l'extérieur du boîtier.

A l'intérieur du boîtier, sont prévus deux miroirs plans réfléchissants 105 et 107, positionnés respectivement le long de la paroi 101d et le long de la paroi 101c, et une source lumineuse 109, par exemple une source laser, un vidéoprojecteur à LED miniaturisé, etc., positionnée approximativement à l'angle entre les parois 101b et 101e. La source 109 est positionnée de façon à éclairer le miroir 107, de sorte que le faisceau réfléchi par le miroir 107 atteigne le miroir 105 et que le faisceau réfléchi par le miroir 105 éclaire la face arrière de l'écran 103. A titre d'exemple, la source 109 est une source laser mobile en rotation selon deux axes, adaptée à projeter une image sur la face arrière de l'écran 103, par balayage, par l'intermédiaire des miroirs 107 et 105. L'inclinaison du miroir 105 selon un angle aigu par rapport à l'écran 103, permet une projection sans déformation (un carré donne un carré), lorsque le miroir 105 est placé sensiblement en regard de l'écran 103, comme cela est représenté sur la figure 1.

La figure 2 est une vue en coupe représentant schématiquement un exemple d'un écran 200 d'affichage en rétroprojection. L'écran 200 est essentiellement constitué d'un diffuseur transmissif, c'est-à-dire d'une feuille, plaque ou film transmettant, vers sa face avant, la lumière éclairant sa face arrière, en diffusant plus ou moins fortement cette lumière. Généralement, le cône de sortie du diffuseur est centré sur la direction de propagation de la lumière éclairant sa face arrière, c'est-à-dire que lorsque le diffuseur reçoit, du côté de sa face arrière, un faisceau lumineux sous incidence normale, l'intensité du faisceau émis par le diffuseur du côté de sa face avant est maximale dans un axe normal à l'écran, et décroit au fur et à mesure que l'angle de propagation de la lumière diffusée s'écarte de la normale à l'écran.

Dans un dispositif d'affichage en rétroprojection intégré au niveau de la console centrale d'un habitacle de véhicule, un problème qui se pose est que l'image doit pouvoir être visualisée sous un angle différent de la normale à l'écran, par exemple par le conducteur ou à la fois par le conducteur et un passager avant. Lorsqu'un écran du type décrit en relation avec la figure 2 est utilisé, il convient, pour que l'image perçue par le conducteur et/ou le passager avant soit suffisamment lumineuse, de prévoir une source lumineuse relativement puissante, ce qui entraîne une consommation électrique importante. De plus, la puissance totale du flux émis par le diffuseur étant relativement élevée, des réflexions parasites susceptibles de gêner le conducteur peuvent se produire.

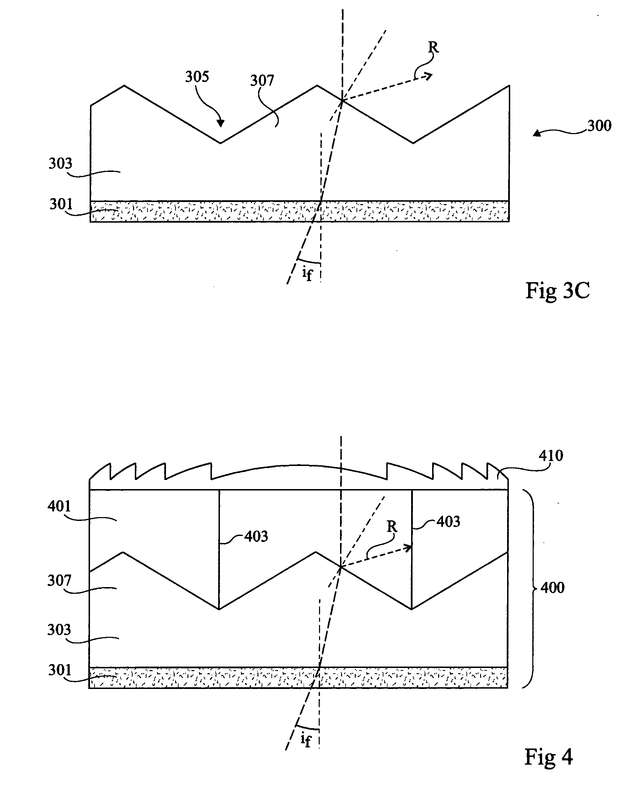

Les figures 3A à 3C représentent schématiquement un autre exemple d'écran d'affichage en rétroprojection. La figure 3A est une vue en perspective de l'écran, la figure 3B est une vue en coupe de l'écran, et la figure 3C est une vue en coupe partielle agrandie de l'écran. L'écran 300 des figures 3A à 3C comprend un diffuseur transmissif 301 du type décrit en relation avec la figure 2. L'écran 300 comprend en outre, accolée à la face arrière du diffuseur 301, une feuille transparente 303 dont la face opposée au diffuseur 301 (c'est-à-dire la face tournée vers la source lumineuse ou face arrière) comporte des stries 305 à section triangulaire définissant des prismes 307. Dans l'exemple représenté, les stries 305 sont parallèles et s'étendent sur toute la largeur de l'écran 300 à pas constant. Dans cet exemple, les prismes 307 définis entre les parois latérales des stries 305 sont tous sensiblement identiques et ont, en section, la forme de triangles isocèles. Dans cet exemple, les bases des prismes 307 (bases des triangles isocèles) définissent une surface plane continue, parallèle au diffuseur 301 et de dimensions sensiblement identiques à celles du diffuseur 301.

Lorsqu'une image est projetée sur la face arrière de l'écran 300, si le pas des prismes est suffisamment petit par rapport à la résolution de l'image, pour chaque pixel de l'image, une partie de la lumière correspondant au pixel est déviée d'un angle $i_f$ vers la gauche (dans l'orientation des figures 3B et 3C), et la partie restante est déviée d'un angle $i_f$ vers la droite (dans l'orientation des figures 3B et 3C). En sortie du diffuseur 301, la lumière correspondant à un pixel donné de l'image est donc répartie dans deux cônes de diffusion centrés sur des axes distincts non orthogonaux à l'écran.

L'utilisation d'un écran à prismes du type décrit en relation avec les figures 3A à 3C dans un dispositif d'affichage en rétroprojection intégré au niveau de la console centrale d'un habitacle de véhicule, permet de rendre l'image projetée sur l'écran visible aussi bien par le conducteur que par le passager, avec un rendement entre la puissance émise par la source lumineuse et la luminosité perçue par l'utilisateur amélioré par rapport aux dispositifs utilisant un écran du type décrit en relation avec la figure 2. Un avantage est que la puissance lumineuse totale émise en sortie du diffuseur peut être diminuée, ce qui permet de limiter les risques de réflexions parasites susceptibles de gêner le conducteur.

On notera que, dans un dispositif d'affichage en rétroprojection utilisant un écran du type décrit en relation avec les figures 3A à 3C, un système optique (non visible sur les figures 3A à 3C) permettant de contrôler l'angle d'incidence de la lumière projetée sur l'écran, par exemple une lentille de Fresnel, peut être prévu entre les éléments de projection et la face arrière de l'écran.

Un inconvénient d'un dispositif d'affichage en rétroprojection utilisant un écran du type décrit en relation avec les figures 3A à 3C est qu'une partie R de la lumière projetée sur l'arrière de l'écran est réfléchie par les faces latérales des prismes 307. Compte tenu de la compacité des dispositifs d'affichage en rétroprojection intégrés dans des habitacles de véhicule, la lumière réfléchie par les prismes 307 peut être renvoyée vers des miroirs du dispositif, puis projetée à nouveau sur la face arrière de l'écran, dégradant la qualité de l'image affichée et notamment son contraste.

La figure 4 est une vue en coupe partielle et schématique d'un dispositif d'affichage en rétroprojection comportant un autre exemple d'écran d'affichage en rétroprojection.

L'écran 400 du dispositif de la figure 4 comprend les mêmes éléments que l'écran 300 des figures 3A à 3C, et comprend en outre, sur l'arrière de la feuille 303, une couche 401 en un matériau d'indice de réfraction différent de celui de la feuille 303. Du côté de sa face tournée vers l'avant de l'écran, la couche 401 épouse la forme des prismes de la feuille 303, et, du côté de sa face tournée vers l'arrière de l'écran, la couche 401 est sensiblement plane et parallèle au diffuseur 301.

Le dispositif d'affichage de la figure 4 comprend en outre une lentille de Fresnel 410 adaptée à orienter les rayons lumineux projetés par la source (non représentée) orthogonalement à l'écran 400. Dans cet exemple, la lentille de Fresnel 410 est accolée à la face arrière de la couche 401. La couche 401 fait ainsi interface entre la lentille de Fresnel 410 et la feuille 303, et permet notamment d'éviter la présence de lames d'air entre la lentille de Fresnel 410 et les prismes 307 de la feuille 303.

Pour réduire les inconvénients résultant de la réflexion partielle, sur les faces latérales des prismes, des rayons projetés par la source, l'écran 400 comprend, entre les prismes 307, des cloisons 403 en un matériau opaque, s'étendant dans la couche 401 orthogonalement au plan de l'écran (sur toute l'épaisseur de la couche 401 dans l'exemple représenté). Les cloisons 403 bloquent la lumière parasite réfléchie par les prismes, et impactent peu la lumière incidente dans la mesure où le faisceau projeté sur l'écran est collimaté orthogonalement à l'écran par la lentille de Fresnel 410.

Toutefois, un inconvénient est que la réalisation des cloisons 403 est relativement complexe.

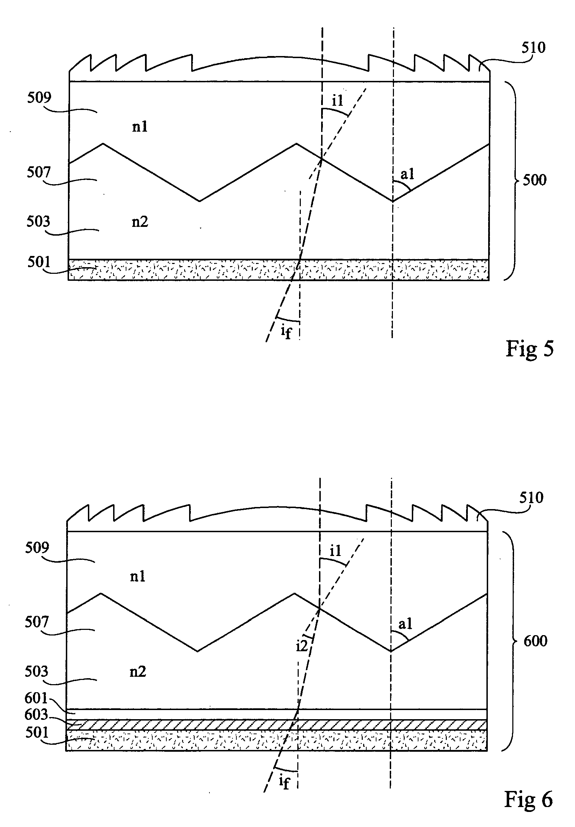

La figure 5 est une vue en coupe partielle et schématique illustrant un exemple d'un mode de réalisation d'un dispositif d'affichage en rétroprojection. En particulier, la figure 5 comprend une vue en coupe partielle et schématique d'un exemple d'un mode de réalisation d'un écran d'affichage en rétroprojection.

L'écran 500 du dispositif d'affichage de la figure 5 comprend un diffuseur transmissif 501. A titre d'exemple, le diffuseur 501 peut être un diffuseur lenticulaire cylindrique du type décrit dans l'article "A dual-directional light-control film with a high-sag and high-asymmetrical-shape microlens array fabricated by a UV imprinting process" de Ta-Wei Lin et al. La prévision d'un tel diffuseur a pour avantage de réduire les phénomènes de tavelure ("speckle" en anglais) lorsque la source lumineuse du dispositif d'affichage est une source à forte cohérence lumineuse, par exemple une source laser. D'autres types de diffuseurs peuvent toutefois être utilisés, par exemple un diffuseur du type commercialisé par la société LUMINIT sous la dénomination "Light Shaping Diffuser".

L'écran 500 comprend en outre, accolée à la face arrière du diffuseur 501, une feuille transparente 503 dont la face opposée au diffuseur 501 (ou face arrière) comporte des stries à section triangulaire définissant des prismes 507. Dans l'exemple représenté, les stries sont parallèles et s'étendent sur toute la largeur de l'écran 500, à pas constant. Dans cet exemple, les prismes 507 définis entre les parois latérales des stries sont tous sensiblement identiques et ont, en section, la forme de triangles isocèles. Dans cet exemple, les bases des prismes 507 définissent une surface plane continue, parallèle au diffuseur 501 et de dimensions sensiblement identiques à celles du diffuseur 501. A titre d'exemple, le pas entre des prismes voisins, correspondant dans cet exemple à la largeur de la base des prismes, peut être compris entre 50 et 500 micromètres. La feuille 503 est par exemple une feuille en ou à base de polytéréphtalate d'éthylène, ou PET, embossée du côté de sa face arrière suivant un motif correspondant à la forme des prismes 507. D'autres matériaux et/ou méthodes de réalisation peuvent toutefois être prévus pour former les prismes 507. A titre d'exemple, les prismes 507 peuvent être réalisés par gravure. Une mince couche de colle, non représentée, peut être prévue entre la face arrière du diffuseur 501 et la face avant de la feuille 503.

L'écran 500 comprend en outre, sur l'arrière de la feuille 503, une couche 509 en un matériau d'indice de réfraction n1 différent de, et de préférence inférieur à, l'indice de réfraction n2 de la feuille 503, par exemple une colle ou un matériau de revêtement ou d'encapsulation. A titre d'exemple, la feuille 503 est une feuille en PET d'indice n2 = 1,65, et la couche 509 est en un polymère commercialisé sous la dénomination MY-133V-2000, d'indice n1 = 1,33. Du côté de sa face avant, la couche 509 épouse la surface en triangles de la feuille 503, et, du côté de sa face arrière, la couche 509 est approximativement plane et parallèle au diffuseur 501.

Dans l'exemple de la figure 5, le dispositif d'affichage comprend en outre un système optique 510 adapté à contrôler l'angle d'incidence, sur l'écran 500, des rayons lumineux projetés par la source (non représentée). Dans cet exemple, le système optique 510 est tel que tous les rayons lumineux projetés par la source arrivent sur la face arrière de l'écran sous une incidence approximativement normale (orthogonalement au diffuseur 501). Dans cet exemple, le système optique 510 comprend une lentille de Fresnel accolée à la face arrière de la couche 509. La couche 509 fait interface entre la lentille de Fresnel 510 et la feuille 503, et permet notamment d'éviter la présence de lames d'air entre la lentille de Fresnel 510 et les prismes 507.

Selon un aspect, l'inclinaison des faces latérales des prismes 507 de l'écran 500 est telle que le coefficient de réflexion, sur les faces latérales des prismes, d'un rayon arrivant sur la face arrière de l'écran, sous incidence normale et polarisé rectilignement selon une direction parallèle au plan d'incidence du rayon sur les faces latérales des prismes (c'est-à-dire avec une polarisation dite de type p par rapport aux plans des faces latérales des prismes), est approximativement nul, par exemple inférieur à 0,5 pourcent et de préférence inférieur à 0,1%. En d'autres termes, l'inclinaison des faces latérales des prismes 507 par rapport au plan de l'écran est telle que l'angle d'incidence, sur les parois latérales des prismes, d'un rayon arrivant sur la face arrière de l'écran sous incidence normale, est approximativement égal, par exemple égal à plus ou moins 5 degrés près, et de préférence égal à plus ou moins 1 degré près, à l'angle de Brewster du dioptre formé à l'interface entre la couche 509 et les parois latérales des prismes 507.

L'annulation de la réflexion de la polarisation de type p sur les faces latérales des prismes 507 est obtenue lorsque :

$$n1 * \cos(i2) = n2 * \cos(i1),$$

où i1 désigne l'angle d'incidence des rayons lumineux projetés par la source sur les faces latérales des prismes, et i2 désigne l'angle de réfraction des rayons par le dioptre formé entre la couche 509 et les faces latérales des prismes 507.

Dans le dispositif d'affichage de la figure 5, les rayons lumineux projetés par la source arrivent sur l'écran sous incidence normale. Ainsi, par construction, l'angle i1 est égal à 90° - a1, où a1 désigne l'angle formé entre les plans des faces latérales des prismes 507 et une droite normale à l'écran. L'angle i2 étant défini par la relation :

$$n2 * \sin(i2) = n1 * \sin(i1),$$

l'angle a1 pour lequel la réflexion de la polarisation de type p est nulle est tel que :

$$n1 \, * \, \cos\!\left(\arcsin\!\left(\frac{n1}{n2} \, * \, \cos\,(\text{al})\right)\right) \, = \, n2 \, * \, \sin\,(\text{al}).$$

L'angle i$_f$ de déviation, par les prismes, de la lumière projetée par la source sur la face arrière de l'écran, est alors imposé et donné par la formule :

$$i_f \, = \, \arcsin\!\left(n2 \, * \, \cos\!\left(\text{al} \, + \, \arcsin\!\left(\frac{n1}{n2} \, * \, \cos\,(\text{al})\right)\right)\right).$$

Dans le cas d'un dispositif destiné à être intégré au niveau de la console centrale d'un véhicule automobile, on prévoit de préférence d'utiliser une feuille 503 et une couche 509 d'indices respectifs n2 et n1 permettant d'obtenir un angle i$_f$ adapté à la visualisation de l'image à la fois par le conducteur et par le passager avant, par exemple un angle compris entre 10 et 30 degrés.

Dans l'exemple ci-dessus dans lequel les indices n1 et n2 sont respectivement égaux à 1,33 et 1,65, on obtient un angle a1 de l'ordre de 50 degrés pour la construction des prismes, et un angle i$_f$ de déviation de la lumière projetée par les prismes d'environ 15 degrés (pour partie vers la gauche et pour partie vers la droite) par rapport à la normale à l'écran.

Selon un autre aspect, la source lumineuse (non représentée) du dispositif d'affichage de la figure 5 émet une lumière polarisée rectilignement de type p par rapport aux faces latérales des prismes 507. La source lumineuse peut être un vidéoprojecteur à lumière polarisée, une source laser, ou toute autre source lumineuse adaptée à émettre de la lumière polarisée. Le dispositif d'affichage de la figure 5 peut avoir une configuration du type décrit en relation avec la figure 1, ou toute autre configuration (avec ou sans miroirs) permettant la projection d'une image sur la face arrière de l'écran 500.

Ainsi, le dispositif d'affichage de la figure 5 permet avantageusement de supprimer toute réflexion, sur les faces latérales des prismes 507, de la lumière projetée par la source.

Un autre avantage du dispositif de la figure 5 est que l'écran 500 ne comprend pas de cloisons opaques entre les faces latérales des prismes, et est ainsi plus facile à réaliser que l'écran 400 du dispositif de la figure 4.

La figure 6 est une vue en coupe partielle et schématique illustrant une variante de réalisation du dispositif d'affichage en rétroprojection de la figure 5. Le dispositif de la figure 6 diffère du dispositif de la figure 5 essentiellement par la structure de son écran de rétroprojection.

L'écran 600 du dispositif de la figure 6 comprend les mêmes éléments que l'écran 500 du dispositif de la figure 5, et comprend en outre, entre la face avant de la feuille 503 et la face arrière du diffuseur 501, un polariseur 601 et une lame quart d'onde 603. Le polariseur 601 est accolé à la face avant de la feuille 503 et laisse passer, dans les deux sens, uniquement la lumière ayant la même polarisation rectiligne que la source lumineuse, c'est-à-dire une polarisation de type p par rapport aux plans des faces latérales des prismes. La lame quart d'onde 603 est disposée entre le polariseur 601 et le diffuseur 501, et est par exemple orientée de façon que ses axes neutres forment un angle d'approximativement 45 degrés, par exemple un angle compris entre 40 et 50 degrés, avec la direction de polarisation du polariseur 601.

Le polariseur 601 n'a pas d'effet sur la lumière provenant de la source lumineuse de projection, puisque cette lumière est déjà polarisée rectilignement dans la même direction que le polariseur 601. Le polariseur 601 permet en revanche de filtrer la moitié de la lumière non polarisée provenant de l'extérieur du dispositif d'affichage, par exemple du soleil, et susceptible de se réfléchir sur les miroirs du dispositif d'affichage et de dégrader la qualité de l'image affichée et notamment son contraste.

La lame quart d'onde 603 a pour effet de transformer la polarisation rectiligne de la lumière émise par la source en une polarisation circulaire. Ceci permet notamment d'éviter une incompatibilité du dispositif avec l'utilisation de lunettes polarisantes, notamment lorsque le diffuseur 501 est un diffuseur holographique, ne dépolarisant pas la lumière.

Des modes de réalisation particuliers ont été décrits. Diverses variantes et modifications apparaîtront à l'homme de l'art.

En particulier, on a décrit ci-dessus des modes de réalisation dans lesquels les prismes 507 ont, en section, la forme de triangles isocèles, ce qui permet de distribuer le flux lumineux projeté par la source pour partie vers la droite de l'écran, et pour partie vers la gauche de l'écran (dans l'orientation des figures). Les modes de réalisation décrits ne se limitent toutefois pas à ce cas particulier. A titre d'exemple, si on souhaite dévier le flux lumineux projeté par la source d'un seul côté de l'écran, on peut prévoir des prismes dans lesquels l'une des faces latérales du prisme forme un angle droit avec sa base, l'autre face ayant une inclinaison adaptée à supprimer toute réflexion de la polarisation de type p.

Par ailleurs, les modes de réalisation décrits ci-dessus sont compatibles non seulement avec des écrans plans, mais aussi avec des écrans de formes courbes.

De plus, en partant des modes de réalisation décrits ci-dessus, l'homme de l'art pourra, sans faire preuve d'activité inventive, ajouter à l'empilement de l'écran, des couches, feuilles, films ou plaques supplémentaires, pour mettre en oeuvre d'autres fonctions, par exemple une ou plusieurs couches antireflets. A titre de variante, un diffuseur holographique, non représenté sur les figures, peut être ajouté entre la lentille de Fresnel 510 et la couche 509 de l'écran, de façon à réduire les phénomènes de tavelure.

En outre, on a décrit ci-dessus des modes de réalisation d'écrans comportant plusieurs éléments empilés. Les modes de réalisation décrits ne se limitent pas aux exemples susmentionnés de réalisation des divers éléments d'écran. On comprendra que chaque élément d'écran pourra être réalisé sous forme de feuille, de couche, de film, de plaque, etc.

De plus, dans les modes de réalisation décrits, on a mentionné des orientations parallèles ou orthogonales au plan de l'écran. On comprendra que par parallèle, orthogonal ou normal, on entend dans la présente demande approximativement parallèle ou approximativement orthogonal respectivement, c'est-à-dire formant par exemple un angle de plus ou moins 5 degrés avec le plan de l'écran ou avec la normale à l'écran respectivement.

**Revendications**

1. Ecran (500 ; 600) d'affichage en rétroprojection, comprenant un film (503) dont une face tournée vers l'arrière de l'écran comporte des stries à section triangulaire définissant des prismes (507), dans lequel au moins une paroi de chacune desdites stries a une inclinaison (a1) telle que l'angle d'incidence, sur ladite paroi, d'un rayon lumineux normal à l'écran soit égal, à 5 degrés près, à l'angle de Brewster du dioptre formé par ladite paroi.

2. Ecran (500 ; 600) selon la revendication 1, dans lequel les prismes (507) ont, en section, la forme de triangles isocèles.

3. Ecran (500 ; 600) selon la revendication 2, dans lequel la base des prismes (507) définit une surface continue parallèle à l'écran.

4. Ecran (500 ; 600) selon l'une quelconque des revendications 1 à 3, comprenant en outre une couche (509) revêtant la face striée dudit film (503), d'indice de réfraction (n1) inférieur à l'indice de réfraction (n2) dudit film (503).

5. Ecran (500 ; 600) selon l'une quelconque des revendications 1 à 4, dans lequel ledit film (503) comporte du polytéréphtalate d'éthylène.

6. Ecran (500 ; 600) selon l'une quelconque des revendications 1 à 5, comportant en outre un diffuseur (501) situé du côté de la face non striée dudit film (503).

7. Ecran (600) selon l'une quelconque des revendications 1 à 6, comprenant en outre un polariseur (601) rectiligne situé du côté de la face non striée dudit film (503).

8. Ecran (600) selon l'une quelconque des revendications 1 à 7, comprenant en outre une lame quart d'onde (603) située du côté de la face non striée dudit film (503).

9. Ecran (600) selon la revendication 8 dans son rattachement à la revendication 7, dans lequel le polariseur (601) est situé entre ledit film (503) et la lame quart d'onde (603).

10. Ecran (600) selon la revendication 8 dans son rattachement à la revendication 7, ou selon la revendication 9, dans lequel les axes neutres de la lame quart d'onde (603) forment un angle d'approximativement 45 degrés avec la direction de polarisation du polariseur (601).

11. Dispositif d'affichage en rétroprojection, comprenant un écran (500 ; 600) selon l'une quelconque des revendications 1 à 10, et une source lumineuse adaptée à projeter une image sur l'arrière de l'écran.

12. Dispositif selon la revendication 11, dans lequel l'angle d'incidence (i1) de la lumière projetée par la source sur au moins une paroi de chacune desdites stries est approximativement égal à l'angle de Brewster du dioptre formé par ladite paroi.

13. Dispositif selon la revendication 11 ou 12, dans lequel, la lumière émise par la source est polarisée rectilignement selon une direction parallèle aux plans d'incidence de la lumière sur lesdites parois.

**14.** Dispositif selon l'une quelconque des revendications 11 à 13, dans lequel la lumière projetée par la source éclaire l'arrière de l'écran (500 ; 600) sous une incidence normale à l'écran.

**15.** Dispositif selon l'une quelconque des revendications 11 à 14, comportant en outre une lentille de Fresnel (510) entre la source et l'écran (500 ; 600).

**Patentansprüche**

**1.** Ein Rückprojektionsanzeigebildschirm (500; 600), der einen Film (503) mit einer Oberfläche aufweist, die zu der Rückseite des Bildschirms weist, die. Rillen aufweist, die einen dreieckigen Querschnitt haben, der Prismen (507) definiert, wobei wenigstens eine Wand jeder der Rillen eine Neigung (a1) hat, so dass der Einfallswinkel, auf der Wand, eines Lichtstrahls, der senkrecht zu der Anzeige ist, gleich, innerhalb von 5 Grad, zu dem Brewster-Winkel der Trennfläche ist, die durch die Wand gebildet wird.

**2.** Bildschirm (500; 600) nach Anspruch 1, wobei die Prismen (507) im Querschnitt die Form von gleichschenkligen Dreiecken haben.

**3.** Bildschirm (500; 600) nach Anspruch 2, wobei die Basis der Prismen (507) eine durchgehende Oberfläche parallel zu dem Bildschirm definiert.

**4.** Bildschirm (500; 600) nach einem der Ansprüche 1 bis 3, der weiter eine Schicht (509) aufweist, die die mit Rillen versehene Oberfläche des Films (503) bedeckt, und zwar mit einem Brechungsindex (n1) kleiner als dem Brechungsindex (n2) des Films (503).

**5.** Bildschirm (500; 600) nach einem der Ansprüche 1 bis 4, wobei der Film (503) Polyethylenterephthalat aufweist.

**6.** Bildschirm (500; 600) nach einem der Ansprüche 1 bis 5, der weiter einen Diffuser (501) aufweist, der auf der nicht mit Rillen versehenen Oberfläche des Films (503) angeordnet ist.

**7.** Bildschirm (600) nach einem der Ansprüche 1 bis 6, der weiter einen geradlinigen bzw. linearen Polarisator (601) aufweist, der auf der nicht mit Rillen versehenen Oberseite des Films (503) angeordnet ist.

**8.** Bildschirm (600) nach einem der Ansprüche 1 bis 7, der weiter eine Viertel-Verzögerungsplättchen bzw. $\lambda$/4-Plättchen (603) aufweist, das auf der nicht mit Rillen versehenen Oberseite des Films (503) angeordnet sind.

**9.** Bildschirm (600) nach Anspruch 8, und zwar abhängig nach Anspruch 7 ist, wobei der Polarisator (601) zwischen dem Film (503) und dem Viertel-Verzögerungsplättchen (603) angeordnet ist.

**10.** Bildschirm (600) nach Anspruch 8, und zwar abhängig nach Anspruch 7 oder Anspruch 9, wobei die neutralen Achsen des Viertel-Verzögerungsplättchens (603) einen Winkel von ungefähr 45 Grad mit der Polarisationsrichtung des Polarisierers (601) bilden.

**11.** Eine Rückprojektionsanzeigebildschirm, der die Oberfläche (500; 600) nach einem der Ansprüche 1 bis 10 aufweist, und eine Lichtquelle, die in der Lage ist, ein Bild auf die Rückseite des Bildschirms zu projizieren.

**12.** Einrichtung nach Anspruch 11, wobei der Einfallswinkel (i1) des Lichts, das von der Quelle auf wenigstens eine Wand der Rillen projiziert wird, ungefähr gleich dem Brewster-Winkel der Trennfläche ist, die durch die Wand gebildet wird.

**13.** Einrichtung nach Anspruch 11 oder 12, wobei das Licht, das von der Quelle emittiert wird, geradlinig bzw. linear entlang einer Richtung polarisiert wird, die parallel zu den Ebenen des Einfallswinkels des Lichts auf den Wänden ist.

**14.** Einrichtung nach einem der Ansprüche 11 bis 13, wobei das Licht, das von der Quelle projiziert wird, die Rückseite des Bildschirms (500; 600) mit einem Einfall senkrecht zu dem Bildschirm beleuchtet.

**15.** Einrichtung nach einem der Ansprüche 11 bis 14, die weiter eine Fresnel-Linse (510) zwischen der Quelle und dem Bildschirm (500; 600) aufweist.

# EP 2 808 734 B1

## Claims

1. A rear projection display screen (500; 600), comprising a film (503) having a surface facing the back of the screen comprising ridges having a triangular cross-section defining prisms (507), wherein at least one wall of each of said ridges has an inclination (a1) such that the angle of incidence, on said wall, of a light ray normal to the screen is equal, to within 5 degrees, to the Brewster angle of the surface of separation formed by said wall.

2. The screen (500; 600) of claim 1, wherein the prisms (507) have, in cross-section, the shape of isosceles triangles.

3. The screen (500; 600) of claim 2, wherein the base of the prisms (507) defines a continuous surface parallel to the screen.

4. The screen (500; 600) of any of claims 1 to 3, further comprising a layer (509) coating the ridged surface of said film (503), having a refraction index (n1) smaller than the refraction index (n2) of said film (503).

5. The screen (500; 600) of any of claims 1 to 4, wherein said film (503) comprises polyethylene terephthalate.

6. The screen (500; 600) of any of claims 1 to 5, further comprising a diffuser (501) located on the non-ridged surface side of said film (503).

7. The screen (600) of any of claims 1 to 6, further comprising a rectilinear polarizer (601) located on the non-ridged surface side of said film (503).

8. The screen (600) of any of claims 1 to 7, further comprising a quarter-wave plate (603) located on the non-ridged surface side of said film (503).

9. The screen (600) of claim 8, as dependent upon claim 7, wherein the polarizer (601) is located between said film (503) and the quarter-wave plate (603).

10. The screen (600) of claim 8, as dependent upon claim 7, or of claim 9, wherein the neutral axes of the quarter-wave plate (603) form an angle of approximately 45 degrees with the polarization direction of the polarizer (601).

11. A rear projection display device, comprising the screen (500; 600) of any of claims 1 to 10, and a light source capable of projecting an image onto the back of the screen.

12. The device of claim 11, wherein the angle of incidence (i1) of the light projected by the source on at least one wall of each of said ridges is approximately equal to the Brewster angle of the surface of separation formed by said wall.

13. The device of claim 11 or 12, wherein the light emitted by the source is rectilinearly polarized along a direction parallel to the planes of incidence of the light on said walls.

14. The device of any of claims 11 to 13, wherein the light projected by the source illuminates the back of the screen (500; 600) under an incidence normal to the screen.

15. The device of any of claims 11 to 14, further comprising a Fresnel lens (510) between the source and the screen (500; 600).

**Fig 1**

**Fig 2**

**Fig 3A**

**Fig 3B**

Fig 3C

Fig 4

Fig 5

Fig 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **TA-WEI LIN.** *A dual-directional light-control film with a high-sag and high-asymmetrical-shape microlens array fabricated by a UV imprinting process*